# EUROPÄISCHE PATENTSCHRIFT

(11) **EP 1 875 301 B1**
(45) Veröffentlichungstag und Bekanntmachung des Hinweises auf die Patenterteilung: **12.10.2011**
(21) Anmeldenummer: 06704713.4
(22) Anmeldetag: 22.02.2006
(51) Int. Cl.: G02C 5/12

(54) **NASENABSTUETZUNG FUER EINE BRILLE**
NOSE SUPPORT FOR EYEGLASSES
PLAQUETTE POUR DES LUNETTES

(30) Priorität: 25.04.2005 AT 6942005
(43) Veröffentlichungstag der Anmeldung: 09.01.2008
(73) Patentinhaber: Silhouette International Schmied AG, 4021 Linz (AT)
(72) Erfinder: SCHMIED, Klaus, A-4020 Linz (AT)
(74) Vertreter: Hübscher, Helmut
(86) Internationale Anmeldenummer: PCT/AT2006/000071
(87) Internationale Veröffentlichungsnummer: WO 2006/113949

(56) Entgegenhaltungen:
- EP-A- 0 018 651
- EP-A- 0 141 767
- EP-A- 0 922 987
- EP-A- 1 469 337
- AT-B- 411 800
- DE-A1- 3 417 255

## Beschreibung

### Technisches Gebiet

Die Erfindung, bezieht sich auf eine Nasenabstützung für eine Brille mit einer Nasenauflage und mit einem aus einem Drahtstück bestehenden Halter für die Nasenauflage, wobei die Nasenanflage eine hinterschnittene Tasche zur Steckaufnahme einer aus einem Ende des Drahtstückes des Halters gebogenen Öse aufweist.

### Stand der Technik

Zur Abstützung der Brille auf der Nase eines Brillenträgers sind Nasenabstützungen bekannt (AT 411 800 B), die eine Nasenauflage aus einem vergleichsweise weichen Elastomer und einen beispielsweise im Nasensteg des Brillengestells verankerten Halter aufweist, der aus einem Drahtstück besteht, das im Bereich seines die Nasenauflage aufnehmenden Endes zu einer im wesentlichen rechteckigen Öse gebogen ist. Diese Öse greift formschlüssig in eine hinterschnittene Tasche der Nasenauflage ein, so daß nach dem Aufstecken der Nasenauflage auf den Halter unter einer elastischen Aufweitung der hinterschnittenen Tasche zur Aufnahme der Öse die notwendige Verbindung zwischen dem Halter und der Nasenauflage hergestellt wird. Eine solche Steckverbindung erlaubt allerdings keine Relativbewegung zwischen dem Halter und der Nasenauflage. Die Anpassung der Nasenauflage an die jeweilige Nasenform hängt somit ausschließlich vom Biegeverhalten der Nasenauflage ab.

Ähnliche Nachteile treten bei anderen bekannten Nasenabstützungen auf, bei denen U-förmig gebogene Drahtstücke als Halter für Nasenauflagen verwendet werden. So ist es bekannt (DE 34 17 255 A1), an einem Ansatz der Nasenauflage eine einführseitig konisch erweitere Sackbohrung vorzusehen, in die der freie Schenkel des U-förmig gebogenen Drahtstückes eingreift. Zur Halterung des freien Schenkels ist dieser mit einem Hammerkopf versehen, der mit einer Hinterschneidung des Sackloches zusammenwirkt, wobei für eine Verdrehsicherung gesorgt ist. Bei einer anderen Konstruktion (EP 1 217 417 A1) weist die Nasenauflage an einem Ansatz auf einander gegenüberliegenden Seiten zwei Nuten auf, in die das zu einer Öse geformte Ende des Drahtstückes eingreift. Schließlich ist es bekannt (EP 0 032 475 A1) die beiden Schenkel des U-förmig gebogenen Drahtstückes zwischen zwei Teilblöcken eines in die Nasenauflage eingegossenen Fortsatzes mittels einer Schraube festzuklemmen, was wiederum eine formschlüssige Verbindung schafft, die eine begrenzte Beweglichkeit der Nasenauflage gegenüber dem Drahtstück ausschließt.

### Darstellung der Erfindung

Der Erfindung liegt somit die Aufgabe zugrunde, eine Nasenabstützung für eine Brille der eingangs geschilderten Art so auszugestalten, daß eine verbesserte Anpassung der Nasenauflage an die jeweilige Nasenform erreicht wird, ohne auf einfache Herstellungs- und Montagebedingungen verzichten zu müssen.

Die Erfindung löst die gestellte Aufgabe dadurch, daß das die Öse formende Ende des Drahtstückes haarnadelförmig gebogen ist, wobei der die beiden Schenkel des haarnadelförmigen Endabschnittes verbindende Steg eine gegenüber den anschließenden Schenkeln erweiterte Rundöse bildet, und daß sich die Tasche der Nasenauflage einerseits von der Hinterschneidung weg in der Ebene der haarnadelförmig gebogenen Schenkel des Drahtstückes und anderseits quer zu dieser Ebene über die gesamte Taschentiefe nach außen erweitert.

Zufolge der Ösenausbildung als Rundöse wird in einfacher Weise eine Voraussetzung für eine Drehung der Nasenauflage gegenüber dem Halter um die Ösenachse geschaffen. Es braucht sich daher lediglich die Tasche der Nasenauflage von der Hinterschneidung weg in der Ebene der haarnadelförmig gebogenen Schenkel des Drahtstückes nach außen zu erweitern, um eine begrenzte Verdrehbarkeit der Nasenauflage um die Ösenachse sicherzustellen. Da sich außerdem die Tasche der Nasenauflage über die gesamte Taschentiefe quer zur gemeinsamen Schenkelebene erweitert, kann die Nasenauflage auch um eine quer zur Ösenachse verlaufende Achse anschlagbegrenzt verschwenkt werden, was ein selbständiges Angleichen der Nasenauflage an die jeweilige Nasenform erlaubt, weil sich die Nasenauflage aufgrund der durch ihre Lagerung gegebenen Freiheitsgrade flächig an die Nase anlegen kann. Die einfache Steckverbindung zwischen dem Halter und der Nasenauflage wird durch diese begrenzt bewegliche Halterung der Nasenauflage nicht beeinträchtigt. Die Nasenauflage kann ja in vergleichbarer Art mit dem Stand der Technik unter einer Aufweitung der hinterschnittenen Tasche zur Aufnahme der Rundöse auf den Halter aufgesteckt werden, bis die Rundöse in die Hinterschneidung einrastet.

Besonders einfache Konstruktionsverhältnisse ergeben sich, wenn die beiden Schenkel des haarnadelförmig gebogenen Endes des Drahtstückes von dem eine im wesentlichen geschlossene Ründöse bildenden Verbindungssteg weg divergieren und somit einen Drehanschlag für die Drehbewegung der Nasenauflage um die Ösenachse bilden.

Da die Halterung der Nasenauflage vergleichsweise wenig Platz beansprucht, ergibt sich die Möglichkeit, die Nasenauflage ringförmig auszubilden und einen in den offenen Ringraum der Nasenauflage radial einspringenden Ansatz zur Aufnahme der Tasche vorzusehen. Die Ringöffnung bietet aufgrund der damit verbunden Belüftung des Auflagebereichs der Nase einen höheren Tragekomfort.

### Kurze Beschreibung der Zeichnung

In der Zeichnung ist der Erfindungsgegenstand beispielsweise dargestellt. Es zeigen
- Fig. 1: eine erfindungsgemäße Nasenabstützung für eine Brille in einer zum Teil aufgerissenen Seitenansicht der Nasenauflage und
- Fig. 2: einen Schnitt nach der Linie II-II der Fig. 1.

Weg zur Ausführung der Erfindung

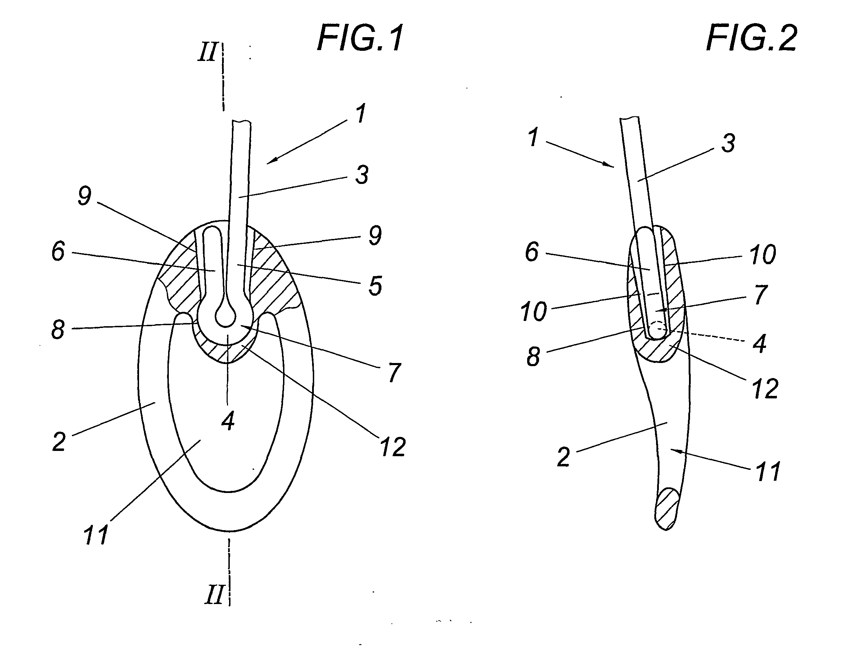

Die dargestellte Nasenabstützung für eine Brille weist einen beispielsweise am Nasensteg eines Brillengestells angreifenden Halter 1 für eine Nasenauflage 2 auf. Dieser Halter 1 besteht aus einem Drahtstück 3, dessen die Nasenauflage 2 aufnehmendes Ende haarnadelförmig gebogen ist, wobei der Verbindungssteg 4 zwischen den beiden Schenkeln 5, 6 des haarnadelförmig gebogenen Endes des Drahtstückes 3 eine Rundöse 7 bildet, die gegenüber den beiden Schenkeln 5, 6 erweitert ist, wie dies der Fig. 1 entnommen werden kann.

Die Nasenauflage 2 ist mit einer hinterschnittenen Tasche 8 zur Steckaufnahme des haarnadelförmig gebogenen Endes des Drahtstückes 3 versehen, wobei die Tasche 8 so ausgebildet ist, daß sie die gegenüber den Schenkeln 5, 6 erweiterte Rundöse 7 in ihrem hinterschnittenen Abschnitt aufnimmt. Die von diesem hinterschnittenen Taschenabschnitt ausgehenden Stirnwände 9 der Tasche 8 erweitern sich vom hinterschnittenen Taschenabschnitt weg nach außen, so daß die Nasenauflage 2 um die Achse der Rundöse gegenüber dem Halter 1 begrenzt verdrehbar gelagert wird. Die Schenkel 5, 6 des haarnadelförmig gebogenen Endes des Drahtstückes 3 divergieren von der Rundöse 7 weg nach außen, so daß diese beiden Schenkel 5, 6 jeweils einen mit den Stirnwänden 9 der Tasche 8 zusammenwirkenden Drehanschlag für die Nasenauflage 2 ergeben.

Wie aus der Fig. 2 hervorgeht, verlaufen auch die Seitenwände 10 der Tasche 8 zueinander geneigt, und zwar über die gesamte Taschentiefe, also auch über den Bereich des hinterschnittenen Taschenabschnittes. Diese sich nach außen öffnende Neigung der Seitenwände 10 zueinander erlaubt ein Verschwenken der Nasenauflage um eine Querachse zur Ösenachse, was eine selbständige Anpassung der Lage der Nasenauflage 2 an die jeweilige Nasenform ermöglicht. Die begrenzte Verschwenkbarkeit der Nasenauflage 2 um die Ösenachse und eine Querachse dazu sichert trotz der vorteilhaften Anpassungsmöglichkeit ein das Aufsetzen der Brille nicht beeinträchtigende Ausgangslage der Nasenauflage 2.

Der für die Halterung der Nasenauflage 2 vergleichsweise geringe Platzbedarf ermöglicht eine ringförmige Ausbildung der Nasenauflage 2, die lediglich zur Aufnahme der Tasche 8 mit einem in den offenen Ringraum 11 radial einwärts vorstehenden Ansatz 12 versehen werden muß. Dieser offene Ringraum 11 erlaubt eine Belüftung des Aufsetzbereiches der Nasenauflage 2 auf der Nase, was den Tragekomfort für die Nasenabstützung verbessert.

## Patentansprüche

1. Nasenabstützung für eine Brille, mit einer Nasenauflage (2) und mit einem aus einem Drahtstück (3) bestehenden Halter (1) für die Nasenauflage (2) wobei die Nasenanflage (2) eine hinterschnittene Tasche (8) zur Steckaufnahme einer aus einem Ende des Drahtstükkes (3) des Halters (1) gebogenen Ose aufweist, **dadurch gekennzeichnet, daß** das die Öse formende Ende des Drahtstückes (3) haarnadelförmig gebogen ist, wobei der die beiden Schenkel (5, 6) des haarnadelförmigen Endabschnittes verbindende Steg (4) eine gegenüber den anschließenden Schenkeln (5, 6) erweiterte Rundöse (7) bildet, und daß sich die Tasche (8) der Nasenauflage (2) einerseits von der Hinterschneidung weg in der Ebene der haarnadelförmig gebogenen Schenkel (5, 6) des Drahtstückes (3) und anderseits quer zu dieser Ebene über die gesamte Taschentiefe nach außen erweitert.

2. Nasenabstützung nach Anspruch 1, **dadurch gekennzeichnet, daß** die beiden Schenkel (5, 6) des haarnadelförmig gebogenen Endes des Drahtstükkes (3) von dem eine im wesentlichen geschlossene Rundöse (7) bildenden Verbindungssteg (4) weg divergieren.

3. Nasenabstützung nach Anspruch 1 oder 2, **dadurch gekennzeichnet, daß** die Nasenauflage (2) ringförmig ausgebildet ist und daß sich die Tasche (8) in einen in den offenen Ringraum (11) der Nasenauflage (2) radial einspringenden Ansatz (12) erstreckt.

## Claims

1. Nose support for a pair of spectacles, having a nose pad (2) and having a retainer (1), which consists of a wire piece (3), for the nose pad (2), wherein the nose pad (2) comprises an undercut pocket (8) for the plug-in reception of an eye bent from one end of the wire piece (3) of the retainer (1), **characterised in that** the end of the wire piece (3) forming the eye is bent in the shape of hairpin, wherein the web (4) which connects the two limbs (5, 6) of the hairpin-shaped end portion forms a round eye (7) which is expanded with respect to the adjoining limbs (5, 6), and that the pocket (8) of the nose pad (2) expands on the one hand outwardly away from the undercut in the plane of the limbs (5, 6) of the wire piece (3) which are bent in the shape of a hairpin, and expands on the other hand outwardly transversely with respect to this plane over the entire pocket depth.

2. Nose support as claimed in claim 1, **characterised in that** the two limbs (5, 6) of the end of the wire piece (3) which is bent in the shape of a hairpin diverge away from the connection web (4) which forms a substantially closed round eye (7).

3. Nose support as claimed in claim 1 or 2, **characterised in that** the nose support (2) is formed in an annular manner, and that the pocket (8) extends into a shoulder (12) which projects radially into the open annular space (11) of the nose support (2).

## Revendications

1. Plaquette pour des lunettes, avec un reposoir à nez (2) et avec un support (1), composé d'une pièce en fil métallique (3), pour le reposoir à nez (2), le reposoir à nez (2) présentant une poche (8) munie d'une contre-dépouille, pour recevoir par emboîtement un oeillet plié à partir d'une extrémité de la pièce en fil métallique (3) du support (1), **caractérisée en ce que** l'extrémité, formant l'oeillet, de la pièce en fil métallique (3) est pliée en forme d'épingle à cheveux, la barrette (4), reliant les deux branches (5, 6) du tronçon d'extrémité en forme d'épingle à cheveux, formant un oeillet rond (7), élargi par rapport aux branches (5, 6) s'y raccordant, et **en ce que** la poche (8) du reposoir à nez (2) est élargie, d'une part, en s'écartant de la contre-dépouille, dans le plan des branches (5, 6) pliées en forme d'épingle à cheveux, de la pièce en fil métallique (3) et, d'autre part, transversalement à ce plan, sur la totalité de la profondeur de poche.

2. Plaquette pour des lunettes selon la revendication 1, **caractérisée en ce que** les deux branches (5, 6) de l'extrémité, en forme d'épingle à cheveux, de la pièce en fil métallique (3) vont en divergeant en s'écartant de la barrette de liaison (4) formant un oeillet rond (7) pratiquement fermé.

3. Plaquette pour des lunettes selon la revendication 1 ou 2, **caractérisée en ce que** le reposoir à nez (2) est conformé en anneau, et **en ce que** la poche (8) s'étend dans un appendice (12), pénétrant radialement dans l'espace annulaire (11) ouvert du reposoir à nez (2).
